# EUROPEAN PATENT APPLICATION

(11) **EP 4 838 380 A1**
(43) Date of publication of application: **11.11.2026**
(21) Application number: 25217155.8
(22) Date of filing: 20.11.2025
(51) Int. Cl.: G06F 16/355

(54) **USING GENERATIVE ARTIFICIAL INTELLIGENCE (AI) FOR AUTOMATIC GENERATION OF CLUSTERING ANALYSIS SUMMARY**

(30) Priority: 05.05.2025 US 202519199185
(71) Applicant: SAP SE, 69190 Walldorf (DE)
(72) Inventor: SERRE, David, 69190 Walldorf (DE); SEAN, Savaneary, 69190 Walldorf (DE)
(74) Representative: Müller-Boré & Partner Patentanwälte PartG mbB

(57) **Abstract**

Embodiments of the present disclosure include techniques for using generative AI for automatic generation of clustering analysis summary. In one embodiment, a clustering summarizer receives a dataset comprising a collection of data points, extracts metadata from the dataset, configures clustering settings, produces clustering data semantics based on the extracted metadata and the clustering settings. A clustering algorithm and the clustering settings are applied to the dataset to identify clusters within the dataset. The clustering summarizer generates statistical descriptions to describe each identified cluster and a set of clustering results. The clustering data semantics and the clustering results are combined to create semantically enriched clustering results. The clustering summarizer creates a clustering summary generation prompt that integrates the semantically enriched clustering results and pre-defined summary generation settings. The prompt is sent to a large language model to summarize the semantically enriched clustering results and generate a clustering summary of the dataset.

## Description

### BACKGROUND

The present disclosure relates generally to computer software systems, and in particular, to systems and methods for using generative AI for automatic generation of clustering analysis summary.

A classic task in data analysis is identifying groups of similar observations or entities based on their attributes. This task is known as clustering analysis. The groups formed are called clusters. Various clustering techniques exist, primarily designed to assign observations to cluster labels. However, understanding what makes each cluster unique from a business perspective is ultimately the user's responsibility. A common method for visualizing cluster profiles is to plot data points in a two-dimensional (2D) space, coloring them according to their assigned clusters. Unfortunately, this technique has several drawbacks. The technique of using 2D space becomes ineffective with more than two clustering variables. The technique is also limited to numeric data. The technique becomes harder to interpret as the number of clusters increases and provides only qualitative summaries. The summarizing task is time-consuming and requires data science skills.

The following disclosure provides various technical solutions to issues associated with generation of clustering analysis summaries.

### BRIEF DESCRIPTION OF THE DRAWINGS

Fig. 1 illustrates a system for using generative AI for automatic generation of clustering analysis summary according to an embodiment.
Fig. 2 illustrates a method for using generative AI for automatic generation of clustering analysis summary according to an embodiment.
Fig. 3A illustrates an example of clustering results formatted as a JavaScript Object Notation (JSON) object, containing cluster statistics generated by a clustering analyzer.
Fig. 3B illustrates an example clustering summary generation prompt.
Fig. 4A illustrates an example dataset.
Fig. 4B illustrates a second example dataset.
Fig. 4C illustrates a third example dataset.
Fig. 4D illustrates a fourth example dataset.
Fig. 5 illustrates hardware of a special purpose computing system configured according to the above disclosure.

### DETAILED DESCRIPTION

Described herein are techniques using generative AI for automatic generation of clustering analysis summary. In the following description, for purposes of explanation, numerous examples and specific details are set forth in order to provide a thorough understanding of some embodiments. Various embodiments as defined by the claims may include some or all of the features in these examples alone or in combination with other features described below and may further include modifications and equivalents of the features and concepts described herein.

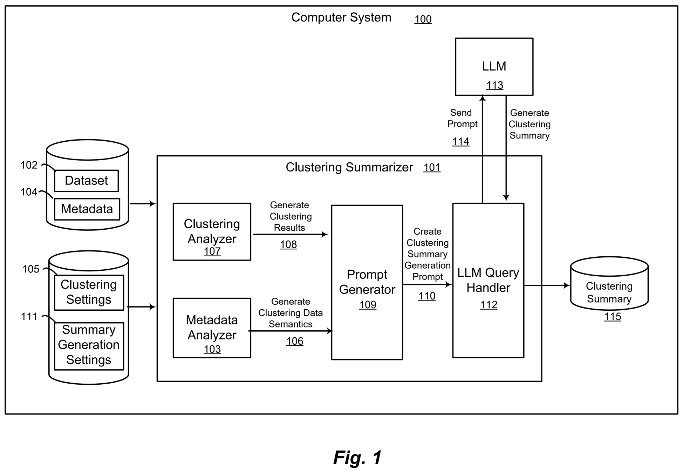

Fig. 1 illustrates a system for using generative AI for automatic generation of clustering analysis summary according to an embodiment. Features and advantages of the present disclosure include a clustering summarizer that provides a concise and automated clustering summary, executing on a computer system 100. Computer system 100 may include, for example, one or more computers comprising one or more processors and a computer readable medium (memory) for executing software to perform the techniques described herein. Here, embodiments of the present disclosure include techniques for using generative AI for automatic generation of clustering analysis summary, for example. Embodiments of the present disclosure overcome the technical challenges associated with generation of clustering analysis summary. Further examples for overcoming the technical challenges are described in more detail below.

Initially, the clustering summarizer 101 receives a dataset 102 comprising a collection of data points. The metadata analyzer 103 extracts metadata 104 from the dataset 102. The metadata 104 comprises semantic and contextual information pertaining to the dataset 102. In some examples, semantic and contextual information includes details such as a list of columns, the meaning of each column, whether the information is a dimension or a measure, the categories for each dimension, etc. A user may configure clustering settings 105 for the dataset 102. In some examples, configuring the clustering settings may include specifying the number of clusters to be generated, selecting columns from the dataset for clustering, encoding the data points for clustering, etc. In some examples, encoding the data points include a process of transforming raw data into numerical format or representation that can be effectively processed by clustering algorithms to identify patterns and group similar data points. The metadata analyzer 103 generates clustering data semantics 106 based on the extracted metadata 104 and the clustering settings 105. For example, the columns used in the clustering are identified based on the clustering settings and the information is extracted from the metadata. The clustering analyzer 107 applies a clustering algorithm and the clustering settings 105 to the dataset 102 to identify one or more clusters within the dataset 102. Each identified cluster corresponds to a classification of the data points. In some examples, the clustering analyzer 107 groups similar observations (aka, data points) into clusters and assigns a cluster ID for each observation. Subsequently, the clustering analyzer 107 generates clustering results 108 based on the identified clusters. The clustering results include statistical descriptions to describe each of the identified clusters. The prompt generator 109 combines the clustering data semantics 106 and the clustering results 108 to create semantically enriched clustering results. The prompt generator 109 creates a clustering summary generation prompt 110 that integrates the semantically enriched clustering results 108 and pre-defined summary generation settings 111. In some examples, the summary generation settings include any requirements about the summary to be generated, such as target audience, content requirements, style requirements, format requirements, etc. In some examples, the prompt generator 109 sends the prompt to a large language model (LLM) query handler 112 for forwarding to a large language model (LLM) 113. The LLM query handler 112 processes the received prompt and sends the prompt 114 to LLM 113 for response generation. LLM 113 generates a clustering summary 115 of the dataset by summarizing the semantically enriched clustering results.

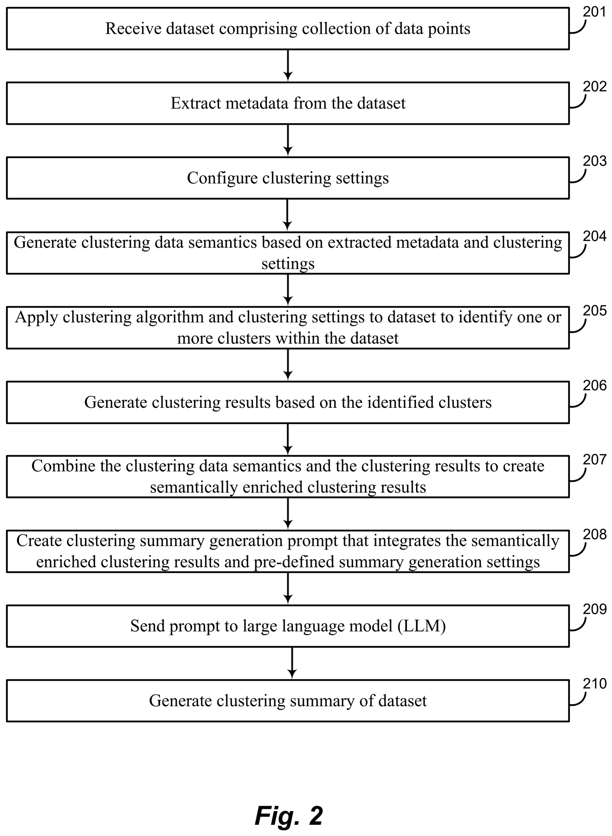

Fig. 2 illustrates a method for using generative AI for automatic generation of clustering analysis summary according to an embodiment. At 201, the clustering summarizer receives a dataset comprising a collection of data points. At 202, the metadata analyzer extracts metadata from the dataset. At 203, the user configures clustering settings for the dataset. At 204, the metadata analyzer generates clustering data semantics based on extracted metadata and clustering settings. At 205, the clustering analyzer applies a clustering algorithm and the clustering settings to the dataset to identify one or more clusters within the dataset. Each identified cluster corresponds to a classification of the datapoint. For example, each datapoint may be assigned to one of the identified clusters. At 206, the clustering analyzer generates clustering results based on the identified clusters. The clustering results include statistical descriptions to describe each of the identified clusters. At 207, the prompt generator combines the clustering data semantics and the clustering results to create semantically enriched clustering results. At 208, the prompt generator creates a clustering summary generation prompt that integrates the semantically enriched clustering results and pre-defined summary generation settings. At 209, the prompt generator sends the prompt to the LLM. At 210, the LLM generates a clustering summary of the dataset by summarizing the semantically enriched clustering results.

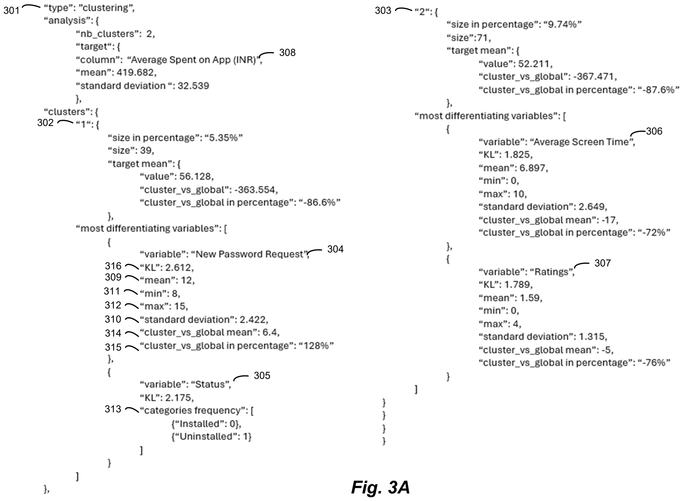

Fig. 3A illustrates an example of clustering results formatted as a JavaScript Object Notation (JSON) object, containing cluster statistics generated by the clustering analyzer. Cluster statistics may be provided as actual sentences or be formatted in any known format the LLM can recognize, such as JSON. Fig. 3A illustrates an example of a JSON object that corresponds to a clustering 301 that produced two clusters 302 and 303, based on four features 304, 305, 306, 307, and one target variable 308. The clustering analyzer generates clustering results (e.g., statistical descriptions to describe each of the identified clusters) by computing various statistics to determine the profiles and specific characteristics (aka, specificity) of the identified clusters. These statistics will be provided to LLM to ensure the LLM can utilize the statistics effectively without making potentially unreliable calculations. The LLM is a language model trained on generic content for the purpose of text generation. The LLM has a basic (statistical) understanding of general concepts and can connect them together based on the basic understanding. The LLM can phrase user-specified content into grammatically correct and natural sounding text. The LLM can consider style requirements to generate text, like speech style or conciseness. Utilizing the LLM, the cluster description can be improved because the text will sound more natural than a template-generated comment. The text can be adapted to the profile of the user through style requirements. The text can also be adapted to highlight some information in regard to a purpose. However, there are deficiencies in LLM that has to be handled. For example, LLM are not reliable when it comes to mathematical tasks. The language model can manage language analysis since LLM are made for language tasks, but LLM cannot be relied upon for statistical analysis. Additionally, LLMs can insert plausible but false content into the generated text, a phenomenon known as "hallucination", which can deceive the user. Therefore, the example embodiments disclosed herein describe the pre-calculation of as many values of interest as possible from the clustering analyzer. To further work around this issue, the LLM is instructed (as part of a clustering summary generation prompt) to generate content based solely on the facts provided.

The clustering results may contain the statistical information describing the clusters' profiles along with the semantical and contextual information required to interpret the clustering results. To determine the profile of a cluster, a summary metric is calculated to describe the distribution of each variable within the cluster. A clustering algorithm may support both numerical and categorical variables as features, allowing for the computation of different summary metrics based on the type of variable. In some examples, the clustering algorithm is selected from a group comprising of K-means, density-based spatial clustering of applications with noise (DBSCAN), hierarchical clustering, or other supervised or unsupervised learning algorithms. For numerical variables 304, metrics such as the average 309, standard deviation 310, minimum 311, maximum 312, and others will be calculated. In the illustrated example of Fig. 3A, 306 and 307 are also examples of numerical variables. For categorical variables 305, the frequency 313 of each category will be computed.

To determine the specificity of a cluster, comparison metrics are computed, such as the absolute 314 and relative 315 differences between the cluster's average and that of the global population. All computed metrics can be accompanied by additional contextual information to aid the LLM in interpreting the metrics, including classification such as levels (e.g., high, low), quality (e.g., good, bad), and significance (e.g., significant, minor). These statistics are calculated for all variables deemed relevant in establishing the profile of a cluster, allowing for the optional selection of which statistics are pertinent for each specific cluster. For instance, a statistical metric like Kullback-Leibler divergence 316 can be utilized to assess which variables exhibit the most divergent distributions within the cluster, helping to identify significant differences in distributions. Kullback-Leibler divergence measures the difference between two probability distributions quantifying how one distribution diverges from a second, expected distribution. Additionally, the clustering algorithm may include a target variable 308 to guide the clustering process, enabling these statistics to be computed for that target variable 308 as well.

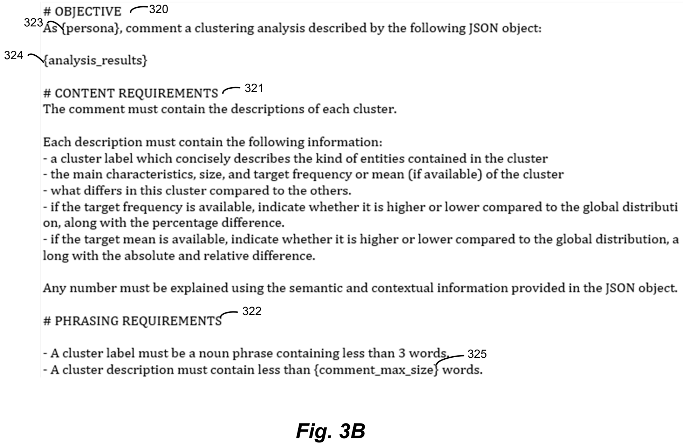

Fig. 3B illustrates an example clustering summary generation prompt. The prompt generator integrates the content generated by the clustering analyzer and the metadata analyzer to create a clustering summary generation prompt that may be sent to the LLM to generate a clustering summary. The clustering summary generation prompt includes three key components, the objective 320, content requirements 321 and phrasing requirements 322. The objective includes two prompt parameters {persona} 323 and {analysis results} 324. The {persona} 323 parameter represents a detailed description of the intended audience for the summary. The {persona} 323 parameter essentially creates a fictional character that reflects the characteristics and preferences of the target audience, allowing for a more tailored response. The {analysis results} 324 parameter refers to the JSON object containing the semantically enriched clustering results generated by the clustering analyzer and the metadata analyzer. The content requirements 321 specify the essential information that must be included in the summary. The phrasing requirements 322 establish guidelines for how the information should be articulated. In the phrasing requirements 322, the {comment_max_size} 325 parameter specifies maximum number of words that can be used to describe a cluster. This flexibility allows the level of detail to be adjusted according to the context or specific user requests. The process automates the long and complex process of transforming raw clustering results into insights.

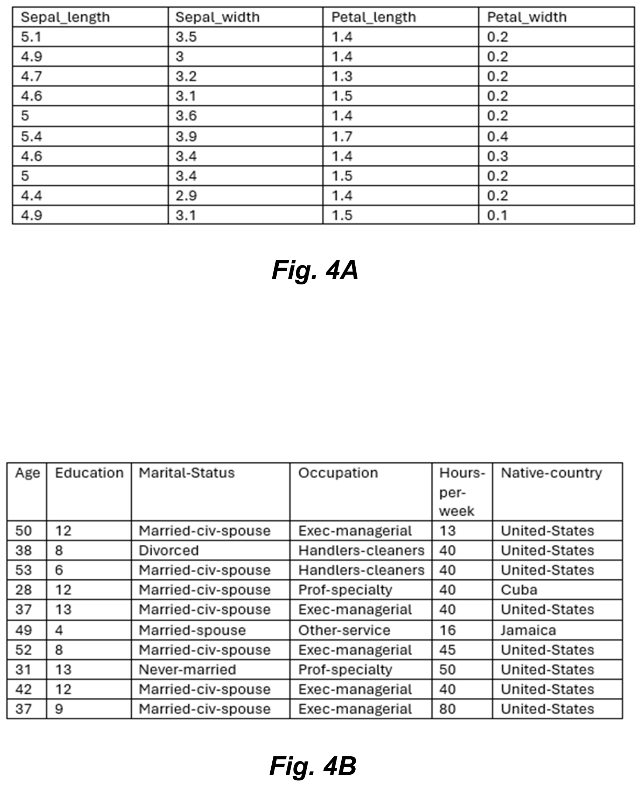

Fig. 4A illustrates an example dataset. Fig. 4A represents an Iris dataset, that includes measurements of the Iris flower's physical characteristics. The figure features columns indicating four key attributes, sepal length, sepal width, petal length and petal width. Each of these attributes provides essential information about the flower's appearance, helping viewers gain a clear and concise overview of the data associated with this cluster. The example clustering result of the sample dataset in Fig. 4A may be presented as a scatter plot. The scatter plot is a graphical tool used to display the relationship between two variables (e.g., sepal length and sepal width). In the context of the Iris dataset, the x-axis typically represents sepal length, and the y-axis indicates sepal width. Each dot on the plot represents an individual iris flower, showing the flower's specific sepal measurements. While scatter plots can help identify trends and clusters, scatter plots have limitations. Visual grouping can be difficult for viewers to draw clear conclusions or summarize the findings, especially when data points are crowded together. The arrangement of the clusters may not provide enough context or detail for a comprehensive understanding of the relationship between the data points. Additionally, scatter plots only show two variables at a time, potentially overlooking other important factors. To improve clarity and provide insights, scatter plots often require additional elements like color coding or group labels.

Example clustering summary of the dataset in Fig. 4A generated using the clustering summary generation prompt template described above in Fig. 3B, with the {persona} parameter defined as someone seeking a high-level understanding of the cluster is illustrated in Table 1.

**TABLE 1**

| Clustering Summary: | |
|---|---|
| 1. | Cluster 1: Small Flowers (32.7%): features low petal and sepal sizes, significantly smaller petal width and length compared to global mean. |
| 2. | Cluster 2: Medium Flowers (25.3%): characterized by medium petal width and length, slightly lower sepal width than average. |
| 3. | Cluster 3: Large Flowers (36.7%): distinguished by high petal and sepal dimensions, notably higher petal width and length than other clusters. |

Table 1 displays a clustering summary produced by the LLM and the clustering summarizer. In some examples, a Gemini 1.5 flash or any other LLM can be utilized to generate these summaries. The characteristics of the summary include several key components that enhance understanding of the clusters. Each cluster summary includes a cluster label (e.g., small flowers, medium flowers, large flowers), and a cluster description of the cluster. Each summary begins with a meaningful cluster label that describes the entities in the cluster instead of a number-based cluster identification (ID). This cluster label succinctly captures the essence of the cluster, making it easier for readers to identify the focus area. Following the cluster label, the summary contains a cluster description that includes characteristics of the cluster, and distinct features of the cluster. The characteristics of the cluster may be the main characteristic of the cluster, size of the cluster, target frequency or mean of the cluster. The cluster description may also include what distinguishes this cluster from the others with distinct features of the cluster. If a target frequency is available, the cluster description may indicate whether the frequency of the data point is higher or lower as compared to the global distribution, along with the percentage difference. If the target mean is available, the cluster description may indicate whether the mean is higher or lower as compared to the global distribution, along with the absolute and relative difference. This cluster description provides details about the data points, offers insights into the typical measurements or attributes that define the cluster, providing a clear view of what the cluster encompasses. The summary further includes an indication of distinct features that differentiate each cluster apart from others. These differentiating characteristics showcase how each cluster varies in terms of important metrics, helping to explain trends and patterns within the dataset. Overall, this structured summary format not only provides clear insights into the individual clusters but also aids in understanding overarching trends and relationships among different clusters, patterns within the dataset, providing insights to the dataset. The clustering summary is easily understandable by end users as opposed to statistical reports that require users to have data science knowledge to decipher the meaning of the data point.

Fig. 4B illustrates a second example dataset. The figure presents an example dataset from the American census. The sample dataset consists of six columns corresponding to a variable or feature of the data. The six columns capture essential demographic and socio-economic information. The columns include age, education, marital status, occupation, hours per week and native country. The age column indicates the age of the individual. The education column reflects the highest level of education attained. The marital status column describes the individual's current marital status. The occupation column identifies the individual's job or profession. The hours per week report the number of hours worked each week. The native country specifies the country of origin or citizenship. Each row in the table represents an individual data point. This table provides a comprehensive snapshot of demographic and employment-related data, facilitating analysis of various trends within the population.

Table 2 illustrates an example of a clustering summary of the dataset in Fig. 4B.

**TABLE 2**

| Clustering Summary (comment_max_size=20): | |
|---|---|
| 1. | Educated Professionals: 27.4% of data, higher education and professional occupations, older age range. |
| 2. | Part-time Older Workers: 14.7% of data, lower weekly working hours, predominantly older and married. |
| 3. | Young Service Workers: 20% of data, younger age, lower education, service-related occupations. |
| 4. | Mid-age Skilled Workers: 9.6% of data, mid-age range, skilled occupations, higher weekly working hours. |
| 5. | Full-time Lower Education: 20.3% of data, full-time workers, lower education levels, diverse occupations. |

The illustrated examples of Table 2 were generated using the clustering summary generation prompt template described above in Fig. 3B, with the {comment_max_size} parameter defined as 20. The {comment_max_size} parameter specifies the maximum number of words that can be used to describe a cluster. Table 2 displays a clustering summary produced by the LLM and the clustering summarizer. The clustering summary includes description of five clusters, with each cluster summarized in a maximum of 20 words. Similar to the example shown in Table 1, the clustering summary features both a cluster label and a cluster description. Even with six columns of variables, the clustering summarizer and the LLM can deliver a clear and easily understandable summary of the dataset to the user.

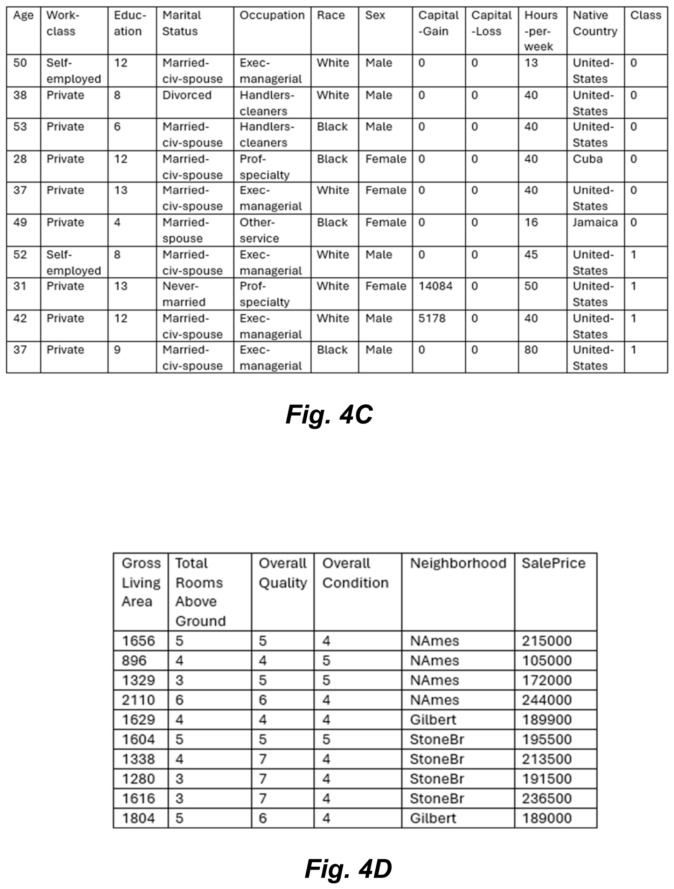

Fig. 4C illustrates a third example dataset. The figure shows a second example dataset from the American census. The sample data from the American census consists of 12 columns that capture various characteristics of individuals. These columns include age, work class, education, occupation, race, sex, capital gains, capital loss, hours per week, native country and class. These diverse features provide a comprehensive view of the data points, allowing for in-depth analysis of demographic and socio-economic trends.

Table 3 illustrates an example clustering summary of the dataset in Fig. 4C.

**TABLE 3**

| Clustering Summary (comment_max_size=50): | |
|---|---|
| 1. | Young or Older Singles: Predominantly never-married individuals, low capital gains, and non-managerial occupations. Size: 23.57%, target frequency significantly lower by 22.96% compared to global. |
| 2. | High Capital Gainers: Higher income from investments, mostly married males in professional specialties. Size: 7.52%, target frequency significantly higher by 43.93% compared to global. |
| 3. | Married Non-Professionals: Mainly married individuals in non-professional jobs, average age around 43. Size: 27.80%, target frequency slightly higher by 5.64% compared to global. |
| 4. | Married Professionals: Predominantly married, professional occupations, higher education levels. Size: 12.69%, target frequency significantly higher by 40.42% compared to global. |
| 5. | Middle-aged Singles: Mostly divorced or never-married, moderate education levels, very low capital gains. Size: 27.30%, target frequency significantly lower by 15.85% compared to global. |

The illustrated examples of Table 3 were generated using the clustering summary generation prompt template described in Fig. 3B above, with the {comment_max_size} parameter defined as 50. The {comment_max_size} parameter specifies the maximum number of words that can be used to describe a cluster. Table 3 displays a clustering summary produced by the LLM and the clustering summarizer. The clustering summary includes a description of five clusters, with each cluster summarized in a maximum of 50 words. Similar to the example shown in Table 1 and 2, this summary features both a cluster label and a cluster description. Since the {comment_max_size} parameter is set to 50 words for the clustering summary, the cluster description for each cluster includes more detailed information. In this example, with 12 variables utilized, the clustering summarizer was able to condense the data and generate a clear and comprehensible summary for the user.

Fig. 4D illustrates a fourth example dataset. The example shows a housing dataset consisting of six distinct columns that provide insights into various property characteristics. These columns include gross living area of the property, total number of rooms above ground level, an overall quality rating of the property, an overall condition of the property, neighborhood names, and the sale price of the property. The dataset allows for analysis of housing features and their correlation with sale prices in different neighborhoods.

Table 4 illustrates an example clustering summary of the dataset in Fig. 4D.

**TABLE 4**

| Clustering Summary (comment_max_size=100): | |
|---|---|
| | High-Value Neighborhoods: This cluster represents 19.3% of the data and includes properties primarily from high-value neighborhoods like Somerset and Northridge Heights. The average sale price here is significantly higher than the global mean by $100,061, which is a 55.4% increase. Properties typically have high overall quality and larger living areas. |
| 2. | Moderate Living Areas: Comprising 29.8% of the data, this cluster features properties with moderate living areas and overall quality ratings mostly around average. The average sale price is slightly above the global mean by $18,082, a 10% increase. Common neighborhoods include College Creek and Gilbert. |
| 3. | Low-Quality Affordable: The largest cluster, making up 46.9% of the data, includes properties with smaller living areas and lower overall quality, predominantly in neighborhoods like North Ames and Edwards. The average sale price is significantly lower than the global mean by $51,935, a 28.7% decrease. |

The illustrated examples of Table 4 were generated using the clustering summary generation prompt template described above in Fig. 3B, with the {comment_max_size} parameter defined as 100. The {comment_max_size} parameter specifies that a maximum of 100 words can be used to describe a cluster. Table 4 displays a clustering summary produced by the clustering summarizer and the LLM. The clustering summary includes a description for three clusters, with each cluster summarized in a maximum of 100 words. The clustering summary features both a cluster label and a cluster description. The {comment_max_size} parameter set to a maximum of 100 words, allows for more detailed descriptions of each cluster. Instead of using short phrases to characterize the clusters, the comments are presented as complete sentences. This approach enables a clearer and more comprehensive understanding of the data, as each cluster is thoroughly described, highlighting the data's unique features and characteristics. Overall, this format enhances the interpretability of the clusters, providing valuable insights into the relationships and distinctions among the data points within each cluster. The {comment_max_size} parameter allows adapting the amount of detail provided depending on the context or the user requests.

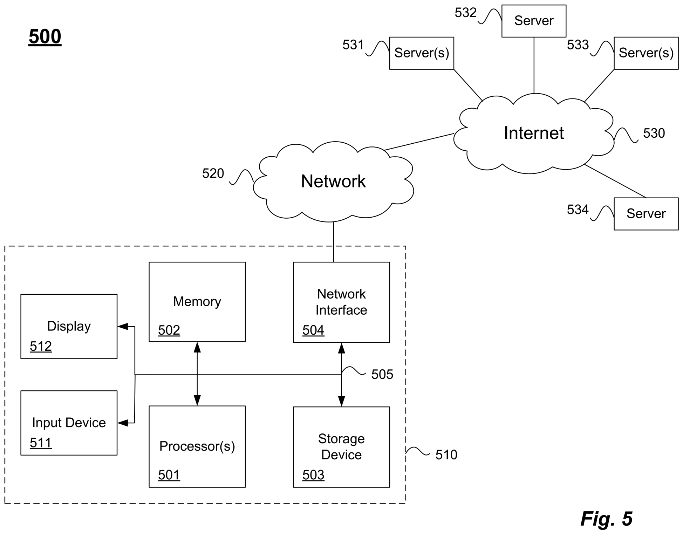

Fig. 5 illustrates hardware of a special purpose computing system 500 configured according to the above disclosure. The following hardware description is merely one example. It is to be understood that a variety of computers topologies may be used to implement the above-described techniques. An example computer system 510 is illustrated in Fig. 5. Computer system 510 includes a bus 505 or other communication mechanism for communicating information, and one or more processor(s) 501 coupled with bus 505 for processing information. Computer system 510 also includes memory 502 coupled to bus 505 for storing information and instructions to be executed by processor 501, including information and instructions for performing some of the techniques described above, for example. Memory 502 may also be used for storing programs executed by processor(s) 501. Possible implementations of memory 502 may be, but are not limited to, random access memory (RAM), read only memory (ROM), or both. A storage device 503 is also provided for storing information and instructions. Common forms of storage devices include, for example, a hard drive, a magnetic disk, an optical disk, a CD-ROM, a DVD, solid state disk, a flash or other non-volatile memory, a USB memory card, or any other electronic storage medium from which a computer can read. Storage device 503 may include source code, binary code, or software files for performing the techniques above, for example. Storage device 503 and memory 502 are both examples of non-transitory computer readable storage mediums (aka, storage media).

In some systems, computer system 510 may be coupled via bus 505 to a display 512 for displaying information to a computer user. An input device 511 such as a keyboard, touchscreen, and/or mouse is coupled to bus 505 for communicating information and command selections from the user to processor 501. The combination of these components allows the user to communicate with the system. In some systems, bus 505 represents multiple specialized buses for coupling various components of the computer together, for example.

Computer system 510 also includes a network interface 504 coupled with bus 505. Network interface 504 may provide two-way data communication between computer system 510 and a local network 520. Network 520 may represent one or multiple networking technologies, such as Ethernet, local wireless networks (e.g., WiFi), or cellular networks, for example. The network interface 504 may be a wireless or wired connection, for example. Computer system 510 can send and receive information through the network interface 504 across a wired or wireless local area network, an Intranet, or a cellular network to the Internet 530, for example. In some embodiments, a frontend (e.g., a browser), for example, may access data and features on backend software systems that may reside on multiple different hardware servers on-prem 531 or across the network 530 (e.g., an Extranet or the Internet) on servers 532-534. One or more of servers 532-534 may also reside in a cloud computing environment, for example.

### FURTHER EXAMPLES

Each of the following non-limiting features in the following examples may stand on its own or may be combined in various permutations or combinations with one or more of the other features in the examples below. In various embodiments, the present disclosure may be implemented as a system, method, or computer readable medium.

Embodiments of the present disclosure may include systems, methods, or computer readable media. In one embodiment, the present disclosure includes computer system comprising: at least one processor and at least one non-transitory computer readable medium (e.g., memory) storing computer executable instructions that, when executed by the at least one processor, cause the computer system to perform methods as described herein and in the following examples. In another embodiment, the present disclosure includes a non-transitory computer-readable medium storing computer-executable instructions that, when executed by at least one processor, perform the methods as described herein and in the following examples.

In one embodiment, the present disclosure includes a computer implemented method comprising: receiving a dataset comprising a collection of data points, extracting metadata from the dataset, configuring clustering settings, generating clustering data semantics based on the extracted metadata and the clustering settings, applying a clustering algorithm and the clustering settings to the dataset to identify one or more clusters within the dataset, wherein each identified cluster corresponds to a classification of the data points, generating clustering results based on the identified clusters, wherein the clustering results include statistical descriptions to describe each of the identified cluster, combining the clustering data semantics and the clustering results to create semantically enriched clustering results, creating a clustering summary generation prompt that integrates the semantically enriched clustering results and pre-defined summary generation settings, sending the prompt to a large language model to summarize the semantically enriched clustering results, and generating a clustering summary of the dataset.

In one embodiment, the metadata comprises semantic and contextual information pertaining to the dataset.

In one embodiment, the configuring the clustering settings further comprising: specifying number of clusters to be generated, selecting columns from the dataset for clustering, and encoding the data points for clustering.

In one embodiment, the clustering algorithm is selected from a group comprising of K-means, DBSCAN, hierarchical clustering, or other supervised or unsupervised learning algorithms.

In one embodiment, the generating the statistical descriptions further comprising: determining a profile of each identified cluster and determining specificity of the identified cluster.

In one embodiment, determining the profile further comprising: utilizing numerical variables and categorical variables as features, and computing summary metrics based on the numerical variables and the categorical variables.

In one embodiment, the determining the specificity further comprising computing comparison metrics, wherein the comparison metrics include an absolute and relative difference between an average in the identified cluster and a global population.

In one embodiment, the clustering summary includes a cluster label describing the entities in the cluster, and a cluster description, wherein the cluster description includes characteristics and distinct feature of the cluster, to provide insights to the dataset.

The above description illustrates various embodiments along with examples of how aspects of some embodiments may be implemented. The above examples and embodiments should not be deemed to be the only embodiments and are presented to illustrate the flexibility and advantages of some embodiments as defined by the following claims. Based on the above disclosure and the following claims, other arrangements, embodiments, implementations, and equivalents may be employed without departing from the scope hereof as defined by the claims.

## Claims

1. A computer implemented method comprising:
receiving a dataset comprising a collection of data points;
extracting metadata from the dataset;
configuring clustering settings;
generating clustering data semantics based on the extracted metadata and the clustering settings;
applying a clustering algorithm and the clustering settings to the dataset to identify one or more clusters within the dataset, wherein each identified cluster corresponds to a classification of the data points;
generating clustering results based on the identified clusters, wherein the clustering results include statistical descriptions to describe each of the identified cluster;
combining the clustering data semantics and the clustering results to create semantically enriched clustering results;
creating a clustering summary generation prompt that integrates the semantically enriched clustering results and pre-defined summary generation settings;
sending the prompt to a large language model; and
generating a clustering summary of the dataset by summarizing the semantically enriched clustering results.

2. The method of claim 1, wherein the metadata comprises semantic and contextual information pertaining to the dataset.

3. The method of claim 1 or 2, wherein configuring the clustering settings further comprising:
specifying number of clusters to be generated;
selecting columns from the dataset for clustering; and
encoding the data points for clustering; and/or
wherein the clustering algorithm is selected from a group comprising of K-means, DBSCAN, hierarchical clustering, or supervised or unsupervised learning algorithms.

4. The method of any one of claims 1 to 3, wherein generating the statistical descriptions further comprising:
determining a profile of each identified cluster; and
determining specificity of the identified cluster.

5. The method of claim 4, wherein determining the profile further comprising:
utilizing numerical variables and categorical variables as features; and
computing summary metrics based on the numerical variables and the categorical variables;
and/or
wherein determining the specificity further comprising computing comparison metrics, wherein the comparison metrics include an absolute and relative difference between an average in the identified cluster and a global population.

6. The method of any one of claims 1 to 5, wherein the clustering summary includes a cluster label describing entities in the cluster, and a cluster description, wherein the cluster description includes characteristics and distinct feature of the cluster, to provide insights to the dataset.

7. A computer system comprising:
at least one processor;
at least one non-transitory computer-readable medium storing computer-executable instructions that, when executed by the at least one processor, cause the computer system to execute a method comprising:
receiving a dataset comprising a collection of data points;
extracting metadata from the dataset;
configuring clustering settings;
generating clustering data semantics based on the extracted metadata and the clustering settings;
applying a clustering algorithm and the clustering settings to the dataset to identify one or more clusters within the dataset, wherein each identified cluster corresponds to a classification of the data points;
generating clustering results based on the identified clusters, wherein the clustering results include statistical descriptions to describe each of the identified cluster;
combining the clustering data semantics and the clustering results to create semantically enriched clustering results;
creating a clustering summary generation prompt that integrates the semantically enriched clustering results and pre-defined summary generation settings;
sending the prompt to a large language model;
summarizing the semantically enriched clustering results; and
generating a clustering summary of the dataset.

8. The computer system of claim 7, wherein the metadata comprises semantic and contextual information pertaining to the dataset;
and/or
wherein configuring the clustering settings further comprising:
specifying number of clusters to be generated;
selecting columns from the dataset for clustering; and
encoding the data points for clustering.

9. The computer system of claim 7 or 8, wherein generating the statistical descriptions further comprising:
determining a profile of each identified cluster; and
determining specificity of the identified cluster.

10. The computer system of claim 9, wherein determining the profile further comprising:
utilizing numerical variables and categorical variables as features; and
computing summary metrics based on the numerical variables and the categorical variables;
and/or
wherein determining the specificity further comprising computing comparison metrics, wherein the comparison metrics include an absolute and relative difference between an average in the identified cluster and a global population.

11. A non-transitory computer-readable medium storing computer-executable instructions that, when executed by at least one processor of a computer system, cause the computer system to execute method comprising:
receiving a dataset comprising a collection of data points;
extracting metadata from the dataset;
configuring clustering settings;
generating clustering data semantics based on the extracted metadata and the clustering settings;
applying a clustering algorithm and the clustering settings to the dataset to identify one or more clusters within the dataset, wherein each identified cluster corresponds to a classification of the data points;
generating clustering results based on the identified clusters, wherein the clustering results include statistical descriptions to describe each of the identified cluster;
combining the clustering data semantics and the clustering results to create semantically enriched clustering results;
creating a clustering summary generation prompt that integrates the semantically enriched clustering results and pre-defined summary generation settings;
sending the prompt to a large language model;
summarizing the semantically enriched clustering results; and
generating a clustering summary of the dataset.

12. The non-transitory computer-readable medium of claim 11, wherein configuring the clustering settings further comprising:
specifying number of clusters to be generated;
selecting columns from the dataset for clustering; and
encoding the data points for clustering.

13. The non-transitory computer-readable medium of claim 11 or 12, wherein generating the statistical descriptions further comprising:
determining a profile of each identified cluster; and
determining specificity of the identified cluster.

14. The non-transitory computer-readable medium of claim 13, wherein determining the profile further comprising:
utilizing numerical variables and categorical variables as features; and
computing summary metrics based on the numerical variables and the categorical variables;
and/or
wherein determining the specificity further comprising computing comparison metrics, wherein the comparison metrics include an absolute and relative difference between an average in the identified cluster and a global population.

15. The non-transitory computer-readable medium of any one of claims 11 to 14, wherein the cluster summary includes a cluster label describing entities in the cluster, and a cluster description, wherein the cluster description includes characteristics and distinct feature of the cluster, to provide insights to the dataset.
